(19) **Europäisches Patentamt**
**European Patent Office**
**Office européen des brevets**

(11) Veröffentlichungsnummer : **0 366 670 B1**

(12) # EUROPÄISCHE PATENTSCHRIFT

(45) Veröffentlichungstag der Patentschrift :
04.09.91 Patentblatt 91/36

(51) Int. Cl.⁵ : **B60C 27/06, B60C 27/10, B60C 27/16**

(21) Anmeldenummer : **88904933.4**

(22) Anmeldetag : **08.06.88**

(86) Internationale Anmeldenummer :
**PCT/EP88/00506**

(87) Internationale Veröffentlichungsnummer :
**WO 88/09730 15.12.88 Gazette 88/27**

(54) LÖSBARE GLEITSCHUTZ-KETTE FÜR EIN FAHRZEUGRAD.

(30) Priorität : **12.06.87 AT 1490/87**
**08.04.88 AT 911/88**

(43) Veröffentlichungstag der Anmeldung :
**09.05.90 Patentblatt 90/19**

(45) Bekanntmachung des Hinweises auf die
Patenterteilung :
**04.09.91 Patentblatt 91/36**

(84) Benannte Vertragsstaaten :
**AT BE CH DE FR GB IT LI LU NL SE**

(56) Entgegenhaltungen :
**DE-A- 2 553 342**
**DE-C- 500 337**
**FR-A- 2 421 767**
**US-A- 2 953 182**
**US-A- 3 200 869**
**Patent Abstracts of Japan, vol. 10, No. 218,**
**(M-5039 (22749 30 July 1986**

(73) Patentinhaber : **URLEB, Alfred**
**Steyrergasse 74**
**A-8010 Graz (AT)**
Patentinhaber : **GANGL, Willibald**
**Beletzweg 1**
**A-8042 Raaba (AT)**

(72) Erfinder : **URLEB, Alfred**
**Steyrergasse 74**
**A-8010 Graz (AT)**
Erfinder : **GANGL, Willibald**
**Beletzweg 1**
**A-8042 Raaba (AT)**

(74) Vertreter : **de Bruijn, Leendert C. et al**
**Nederlandsch Octrooibureau**
**Scheveningseweg 82 P.O. Box 29720**
**NL-2502 LS 's-Gravenhage (NL)**

## Beschreibung

Die Erfindung betrifft eine lösbare Gleitschutzkette für ein Fahrzeugrad, bestehend aus gelenkig miteinander verbundenen Gliedern sowie einem Schnellverschluss welcher die Kettenenden miteinander verbinden kann, welche Ketten den Umfang eines Fahrzeugrades umfassen kann und Teile mit einer Profilierung hat, welche die Griffigkeit des Rades auf dem Boden vergrössern, welche Kette als Spannklammer ausgeführte Glieder hat, welche aus einem elastisch biegsamen Kunststoff bestehen und je einen Bodenteil sowie einheitlich damit ausgebildeten Seitenteilen haben, welche die Seiten der Radbereifung elastisch umklammern können, wobei jedes Bodenteil mit den beiden Seitenteilen eine derartige elastische Einheit bildet, dass das Klemmen auf die Bereifung bezw. das Lösen von der Bereifung ausschliesslich von der Belastung der jeweiligen Spannklammer durch das Fahrzeugrad bestimmt wird.

Eine derartige lösbare Gleitschutzkette ist bekannt aus DE-A-2.553.342. Diese bekannte Gleitschutzkette besteht aus einer Anzahl von Spannklammern welche in Abstand voneinander verteilt über den Umfang des Rades vorgesehen sind und die durch Seiten-stränge miteinander verbunden sind, welche Seitenstränge wieder miteinander verbunden sind durch Querelemente, welche sich in Abständen voneinander befinden in dem Bereich, welcher zwischen den jeweiligen Spannklammern liegt.

Diese Gleitschutzkette ist verhältnismässig kompliziert in der Konstruktion und hat den Nachteil, dass deren Montage umständlich ist, trotz der Tatsache, dass die Spannklammern die Radbereifung elastisch umklammern können, sobald das Rad auf eine Spannklammer rollt und diese Spannklammer dadurch von der gespreizten offenen Lage in die die Radbereifung umschliessende geschlossene Lage bringt. Gerade durch die Seitenstränge und die diesen, verbindenden Querelementen besteht die Gefahr, dass bei der Montage der gegenseitige Abstand der Spannklammern nicht optimal ist, wodurch sich Schwierigkeiten ergeben beim Miteinanderverbinden der Kettenenden, d.h. beim Schliessen der Kette. Die Klammern, welche die Radbereifung schon umklammern, lassen sich nicht mehr über die Bereifung im Umfangsrichtung verschieben.

Zweck der Erfindung ist eine Gleitschutzkette zu schaffen, deren Konstruktion einfach ist und deren Montage die Nachteile der bekannten Kette nicht mehr besitzt.

Dieses Ziel wird erfindungsgemäss dadurch erreicht, dass die Kette ausschliesslich aus Spannklammern besteht, welche unmittelbar gelenkig miteinander verbunden sind und auf ihrer Aussenseite die Profilierung tragen.

Die gelenkige Verbindung, welche keine Verschiebung in Umfangsrichtung zulässt, hat, in Kombination mit der Umklammerung der Seitenteile des Rades, insbesondere der Seitenwange der Radbereifung, zur Folge, dass ein Nachspannen sich erübrigt, weil es keine Längenttoleranzen mehr gibt und die Montage sehr einfach ist, weil beim Auffahren des Rades auf die gestreckt am Boden liegende Kette das erste Glied und die darauffolgenden Glieder auf dem Radumfang festgeklemmt werden, wonach anschliessend nur noch eine Verbindung der Kettenenden stattzufinden hat.

Die Kette besteht also fast ausschliesslich aus Spannklammern, also im wesentlichen aus einer Serie von gelenkig miteinander verbundenen Teilen, was die Konstruktion vereinfacht.

Man kann dieses selbsttätige Einklemmen in verschiedenartiger Weise erreichen. So ist es erfindungsgemäss möglich die Kettenglieder derart auszubilden, dass jede Bodenteil in der unbelasteten Lage nach innen, d.h. von der Laufflächenseite ab, gewölbt ist und die Seitenteile eine derartig steif-elastische Einheit mit dem Bodenteil bilden, dass sie bei Belastung des Bodenteiles infolge des Nachunterdurchbiegens des Bodenteiles sich elastisch an die Seiten des Rades bezw. dessen Bereifung an egen und dort auch durch Reibungsschluss gehalten werden. Beim auf die Kette Fahren muss die Einklemmung aufrechterhalten werden damit die Kette auf dem Radumfang sitzen bleit bevor die beiden Enden miteinander verbunden werden. Dies ist erreichbar indem der durchbiegbare in unbelasteter Lage gewölbte Bodenteil derart ausgebildet ist und eine derartige Formgebung an der Uebergangsstelle mit den Seitenteilen hat, dass nach dem Durchbiegen unter Belastung, wobei sich die Seitenteile an die Seiten des Rades angelen, die Einklemmung beibehalten wird.

Denkbar ist auch, dass man dies erreicht durch die Reibung der Seitenteile des Gliedes auf die gekrümmten Seitenwangen des Luftreifens des Rades, d.h. dass die Neigung des unter Belastung verbogenen gewölbten Bodenteiles des Kettengliedes sich beim Aufheben der Belastung zurückzubiegen, nicht in der Lage ist die dabei notwendige, sei es auch geringe Verschiebung der Seitenglieder über dei Oberfläche der Wangen des Reifens zustandezubringen.

Man kann sich aber auch ein Kettenglied vorstellen, dass derart ausgebildet ist, dass es beim auf die Kette fahren geöffnet wird, d.h. die Seitenwangen werden gespreizt und klemmen sich dann auf das Rad bezw. dessen Reifen fest.

Erfindungsgemäss können die Glieder aus dem der Breite der Lauffläche der Bereifung entsprechenden an seiner Unterseite mit einem Laufprofil profilierten Mittelteil und zwei seitlich und diesen Mittelteil ansetzenden, zur Anlage an den Flanken der Bereifung bestimmten einander gegenüber liegenden Wangen bestehen. Diese Wangen können im Bereich eines konzentrisch verlaufenden Wulstes der Bereifungsflanken Ausnehmungen haben.

Die Verbindung der Kettenglieder kann die Form eines mechanischen Gelenkes haben mit Gelenkstift, dessen Achse quer zur Längsrichtung der Kette verläuft.

Bevorzugt wird jedoch eine Ausführungsform, wobei erfindungsgemäss die Glieder durch wenigstens ein flexibeles Band hoher Zugfestigkeit miteinander verbunden sind. Dieses Band bildet dann die Verbindung welche in Umfangsrichtung des Rades, also in Längsrichtung der Kette, dehnungsfrei sein soll und genügend flexibel, um ein Umlegen auf den Umfag des rades zu ermöglichen. Vorzugsweise erstrecken das Band bezw. die Bänder sich form- und kraftschlüssig durch das Material der Glieder hindurch, d.h. dass sie z.B. durch Umgiessen in das Material der Kunststoffglieder aufgenommen sind.

Bevorzugt werden Bänder aus Polyaramidfasern.

Die Verbindung der beiden Enden der Kette findet statt durch an der Lauffläche der beiden Endglieder des Bandes angeordnete und einander zugeordnete Kupplungsorgane und bevorzugt wird eine Ausführungsform bestehend aus einer mit einem Kniehebel spannbaren, in einer Federverankerung einhakbaren Kupplungsfeder, sowie einer Anzahl wahlweise verwendbarer Verankerungen zum Einhängen des Kniehebels. Diese Verbindung wird also erst zustande gebracht, nachdem das Band auf dem Umfang des Rades angeordnet worden ist und man die Entfernung zwischen den Enden der Kette feststellen kann. Die Feder wird dann eingehakt am einen Ende und ein am anderen Ende vorhandener Querstift wird in die am meisten geeignete Verankerung eingehängt, wonach der Kniehebel umgelegt wird. Die Feder wird dann gespannt und die Verbindung wird durch das Durchknicken des Kniehebels verankert.

Die Erfindung wird jetzt anhand der Zeichnungen näher erläutert werden.

Fig. 1 zeigt einen Querschnitt durch ein Glied der erfindungsgemässen Kette.

Fig. 2 ist eine Ansicht auf die Unterseite von zwei Gliedern der Kette und zwar an der Stelle wo die Kettenenden miteinander zu verbinden sind.

Fig. 3 ist einen Querschnitt gemäss der Linie III-III von Fig. 2.

Fig. 4 ist eine Ansicht auf die Unterseite von zwei Kettengliedern welche mit Bändern verbunden sind.

Fig. 5 ist ein Querschnitt gemäss der Linie V-V von Fig. 4.

Fig. 6, 7 und 8 zeigen in Seitenansicht das Auflegen der Kette bei einem Kraftfahrzeug.

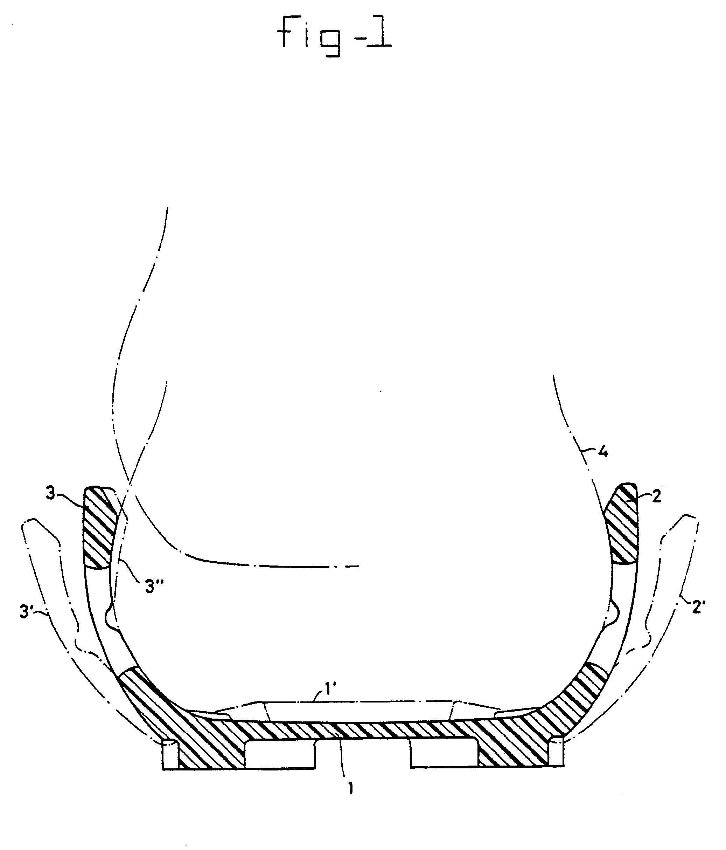

Das in Fig. 1 gezeigte Kettenglied bestebt aus einem Bodenteil 1 mit Seitenteilen 2 bezw. 3. Der Reifen ist mit der Linie 4 angedeutet worden.

Mit strichpunktierten Linien ist die Form des Gliedes angedeutet bei unbelasteter Lage. Der Bodenteil 1' ist dann etwas nach oben gewölbt und die Seitenteile 2' und 3' sind nach aussen abgebogen. Fährt der Reifen auf das Kettenglied, so wird der Boden 1' nach unten gepresst in der mit gezogen Linien angedeuteten Lage. Die Seitenteile biegen sich dann nach innen und werden an die Flanken des Reifens angelegt und zwar mit einer elastischen Spannung, wie angedeutet mit der Linie 3" links in Fig. 1.

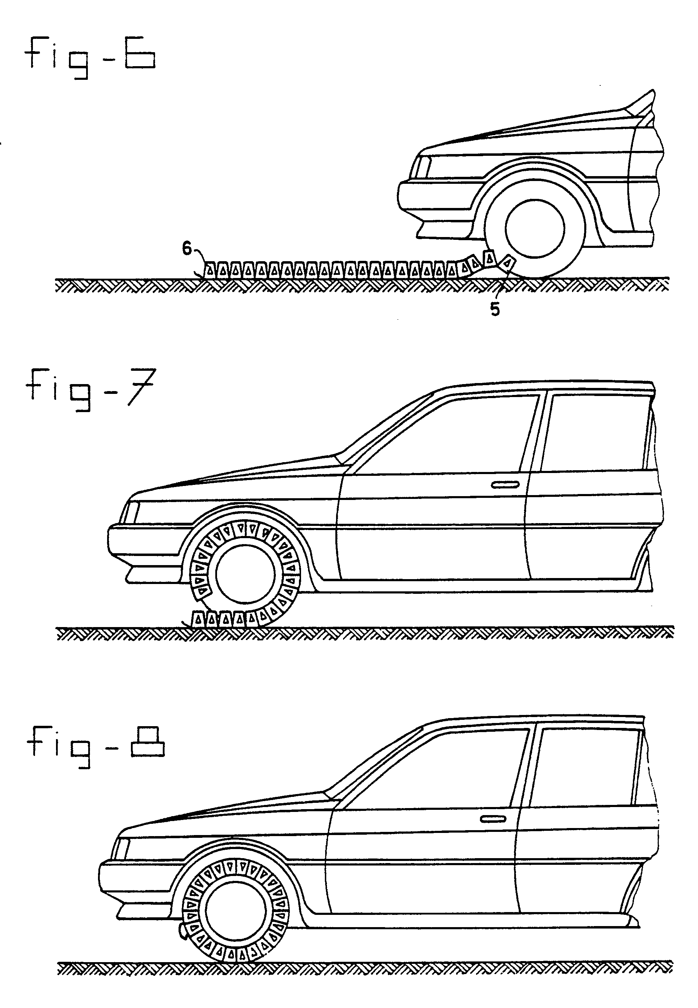

Die Montage findet statt durch einfaches Auffahren wie gezeigt in den Figuren 6, 7 und 8.

Mit der Linie 3" ist auch andeutbar eine erfindungsgemässe Ausführungsform des Kettengliedes, wobei dieses in der unbelasteten nichtmontierten Lage eine Form hat, welche elastisch aufgespreizt wird, sobald der Reifen in das Kettenglied eintritt.

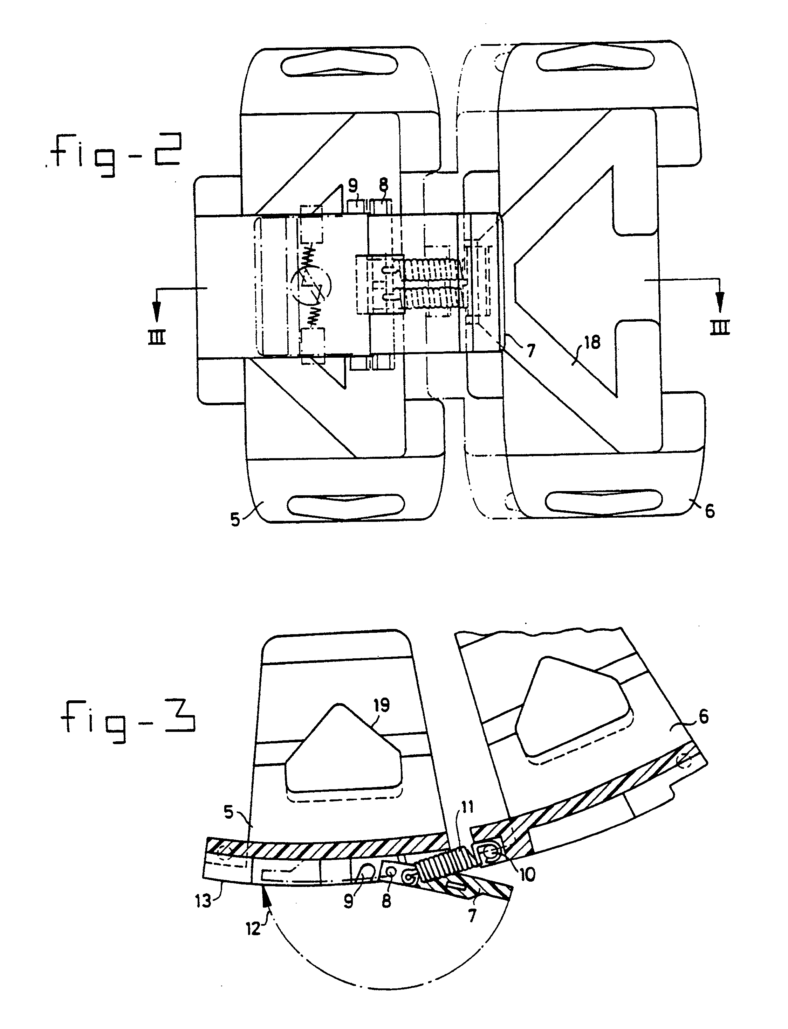

Die Fig. 2 und 3 zeigen die zwei Kettenglieder 5 und 6 am Ende der Kette welche miteinander zu verbinden sind.

Das Verbindungsorgan besteht aus einem Kniehebel 7 der mit einem als Gelenk funktionierenden Querstift 8 in unterschnittenen Aussparungen 9 in der Laufflächenseite des Kettengliedes 5 einhakbar ist. Das andere Kettenglied 6 hat einen Querstift 10 zum Einhaken der Feder 11 des Schnellverschlusses. Dieser Stift 10 könnte in Querrichtung einschiebbar sein, könnte jedoch auch genau sowie der Stift 8 in Aussparungen 9 einhakbar sein.

Aus Fig. 3 geht klar hervor dass man nach Herstellung der Verbindung der Feder 11 mit dem Glied 6 und nach dem Einhaken des Kniehebels 7 eine Spannverbindung zustandebringen kann, indem man den Kniehebel nach links umlegt, gemäss dem Pfeil 12. Der Verschluss befindet sich dann innerhalb des Aussenumfanges 13 der Kette.

Die Kettenglieder sind in Längsrichtung der Kette spielfrei miteinander verbunden. Der Verschluss sorgt also nur dafür, dass die beiden Enden der Kette miteinander verbunden sind, braucht aber keine Nachverstellung zu versorgen.

Die verschiedenen Einrastmöglichkeiten für den Kniehebel des Verschlusses sind erwünscht damit die Kette passt, unabhängig vom Abnutzungsgrad des Reifens.

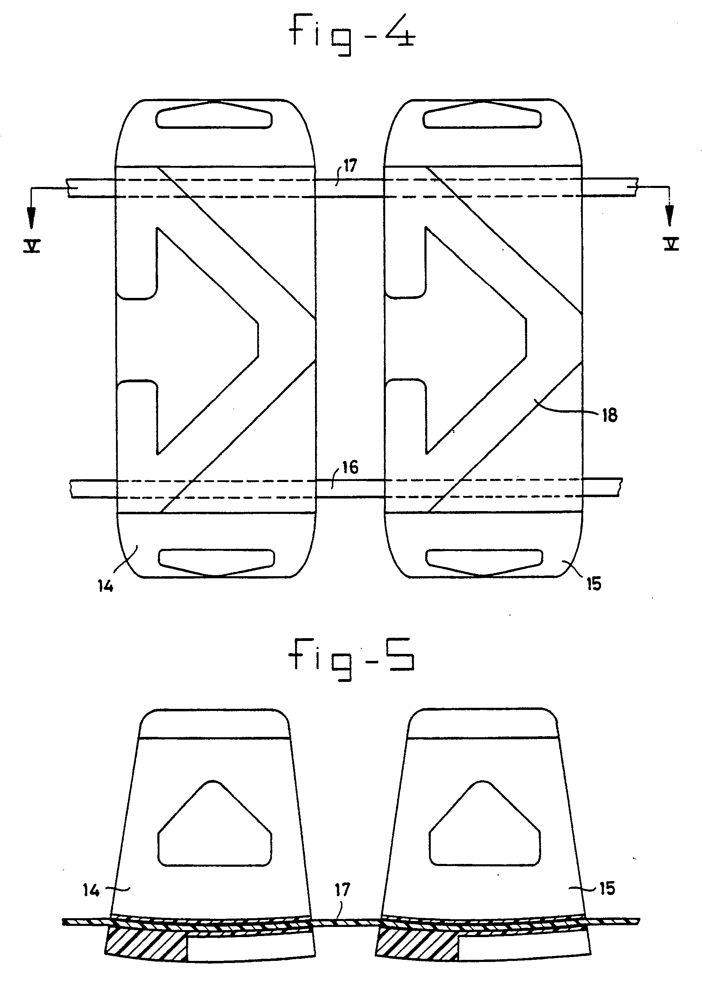

Fig. 4 und 5 zeigen eine Ausführungsform wobei die Kettenglieder 14 und 15 miteinander durch zwei Bänder 16 und 17 verbunden sind, welche aus Aramidfasern bestehen. Wie Fig. 5 zeigt, sind diese Bänder völlig im Material der Glieder aufgenommen worden.

Die Kettenglieder haben eine Profilierung 18 sowie Aussparungen 19 in den Seitenwangen.

**Patentansprüche**

1. Lösbare Gleitschutzkette für ein Fahrzeugrad, bestehend aus gelenkig miteinander verbundenen Gliedern (14, 15) sowie einem Schnellverschluss (7, 8, 9, 10, 11) welcher die Kettenenden (5, 6) miteinander verbinden kann, welche Kette den Umfang eines Fahrzeugrades umfassen kann und Teile (18) mit einer Profilierung (18) hat, welche die Griffigkeit des Rades auf dem Boden vergrössern, welche Kette als Spannklammer ausgeführte Glieder hat, welche aus einem elastisch biegsamen Kunststoff bestehen und je einen Bodenteil (1) sowie einheitlich damit ausgebildete Seitenteile (2, 3) haben, welche die Seiten der Radbereifung (4) elastisch umklasmmern können, wobei jedes Bodenteil (1) mit den beiden Seitenteilen (2, 3) eine derartige elastische Einheit bildet, dass das Klemmen auf die Bereifung (4), bezw. das Lösen von der Bereifung (4) ausschliesslich von der Belastung der jeweiligen Spannklammer durch das Fahrzeugrad bestimmt wird, **dadurch gekennzeichnet,** dass die Kette ausschliesslich aus Spannklammern besteht, welche unmittelbar gelenkig miteinander verbunden sind und auf ihrer Aussenseite die Profilierung tragen.

2. Kette nach Anspruch 1, **dadurch gekennzeichnet,** dass die Seitenteile (2, 3) jeder Spannklammer mit Formschluss die Flanken der Radbereifung umgreifen können.

3. Kette nach Anspruch 1 oder 2, **dadurch gekennzeichnet,** dass jedes Bodenteil (1) in der unbelasteten Lage nach innen, d.h. vor der Lauffläche ab, gewölbt ist, und die Seitenteile (2, 3) eine derartig steif-elastische Einheit mit dem Bodenteil (1) bilden, dass sie bei Belastung des Bodenteiles (1) infolge des nach unten Durchbiegend des Bodenteiles sich elastisch an die Seiten des Rades bezw. dessen Bereifung (4) anlegen und dort auch durch Reibungsschluss gehalten werden.

4. Kette nach Anspruch 1, 2 oder 3, **dadurch gekennzeichnet,** dass die Spannklammern aus dem der Breite der Lauffläche der Bereifung entsprechenden an seiner Unterseite mit einem Laufprofil (18) profilierten Bodenteil (1) und den zwei Seitenteilen in Form von seitlich an diesem Bodenteil ansetzenden zur Anlage an den Flanken der Bereifung (4) bestimmten, einander gegenüberliegenden Wangen (3) bestehen.

5. Kette nach Anspruch 4, **gekennzeichnet durch** in den Wangen (2, 3) im Bereich eines konzentrisch verlaufenden Wulstes der Bereifungsflanken angeordnete Ausnehmungen (19).

6. Kette nach einem oder mehreren der vorhergehenden Ansprüche, **dadurch gekennzeichnet,** dass die Spannklammern durch wenigstens ein flexibles Band (16, 17) hoher Zugfestigkeit miteinander verbunden sind.

7. Kette nach Anspruch 6, **dadurch gekennzeichnet,** dass das Band bezw. die Bänder (16, 17) sich form- und kraftschlüssig durch das Material der Spannklammer hindurch erstrecken.

8. Kette nach Anspruch 6 oder 7, **dadurch**
gekennzeichnet, dass das Band bezw. die Bänder aus Polyaramidfasern bestehen.

## Revendications

1. Chaîne antidérapante détachable pour roues de véhicules composée de maillons (14, 15) reliés l'un à l'autre de manière articulée ainsi que d'une fermeture rapide (7, 8, 9, 10, 11) qui peut relier les extrémités (5, 6) de la chaîne l'une à l'autre, laquelle chaîne peut entourer le périmètre d'une roue de véhicule et présente des parties (18) à profilage (18) qui augmentent l'adhérence au sol de la roue, laquelle chaîne présente des maillons se présentant sous forme de crampons de serrage réalisés en un matériau synthétique flexible élastique et présentant chacun une partie inférieure (1) ainsi que des parties latérales (2, 3) réalisées de manière solidaire avec cette dernière, lesquelles peuvent se cramponner de manière élastique au pneu (4) de la roue, chaque partie inférieure (1) formant, avec les deux parties latérales (2, 3), un ensemble élastique tel que le cramponnage au pneu (4) ou le détachement du pneu (4) est déterminé exclusivement par la sollicitation des crampons de serrage par la roue du véhicule, caractérisée en ce que la chaîne se compose exclusivement de crampons de serrage qui sont directement reliés l'un à l'autre, de manière articulée, et portent le profilage de leur côté extérieur.

2. Chaîne suivant la revendication 1, caractérisée en ce que les parties latérales (2, 3) de chaque crampon de serrage peuvent venir en prise, en liaison de forme, avec les flancs du pneu de la roue.

3. Chaîne suivant la revendication 1 ou 2, caractérisée en ce que chaque partie inférieure (1) est, en position non sollicitée, voûtée vers l'intérieur, c'est-à-dire à partir du côté de la surface extérieure, et que les parties latérales (2, 3) forment, avec la partie inférieure (1), un ensemble rigide-élastique, qu'elles s'appuient, lors de la sollicitation de la partie inférieure (1), du fait de la flexion vers le bas de la partie inférieure, élastiquement contre les côtés latéraux de la roue ou de son pneu (4) et y soient maintenues par fermeture par friction.

4. Chaîne suivant la revendication 1, 2 ou 3, caractérisée en ce que les crampons de serrage se composent de la partie inférieure (1) profilée correspondant à la largeur de la surface extérieure du pneu, avec un profil extérieur (18) de son côté inférieur, et des deux parties latérales sous forme de joues (3) se trouvant l'une en face de l'autre, aboutant latéralement à cette partie inférieure, destinées à s'appuyer contre les flancs du pneu (4).

5. Chaîne suivant la revendication 4, caractérisée par des évidements (19) disposés dans les joues (2, 3), à l'endroit d'un bourrelet, s'étendant concentriquement, des flancs du pneu.

6. Chaîne suivant l'une ou plusieurs des revendications précédentes, caractérisée en ce que les crampons de serrage sont reliés l'un à l'autre par au moins un ruban flexible (16, 17) à haute résistance de rupture à la traction.

7. Chaîne suivant la revendication 6, caractérisée en ce que le ruban ou les rubans (16, 17) s'étendent en liaison de forme et de force à travers le matériau du maillon.

8. Chaîne suivant la revendication 6 ou 7, caractérisée en ce que le ruban ou les rubans sont en fibres polyaramide.

## Claims

1. Detachable anti-skid chain for a vehicle wheel, comprising links (14, 15) connected to one another in articulated fashion and a rapid-action lock (7, 8, 9, 10, 11,) which can connect the chain ends (5, 6) to one another, which chain can grasp the periphery of a vehicle wheel and has parts (18) with a profiling (18) which increase the grip of the wheel on the ground, which chain has links which are designed as clamps which consist of a resiliently flexible plastic and each have a base part (1) and side parts (2, 3), formed integrally with the latter, which can resiliently embrace the sides of the wheel tyres (4), each base part (1) forming with the two side parts (2, 3) a unit of a resilience such that clamping onto the tyres (4) or detachment from the tyres (4) is determined exclusively by the loading of the respective clamp by the vehicle wheel, characterised in that the chain exclusively comprises clamps, which are connected to one another directly in articulated fashion and bear the profiling on their outside.

2. Chain according to Claim 1, characterised in that the side parts (2, 3) of each clamp can grasp the flanks of the wheel tyres with positive engagement.

3. Chain according to Claim 1 or 2, characterised in that, in the unloaded condition, each base part (1) is arched inwards, i.e. away from the tread, and the side parts (2, 3) form with the base part (1) a unit of a rigidity/resilience such that, upon loading of the base part (1), they move up resiliently against the sides of the wheel or the tyres (4) of the latter due to the downward deflection of the base part and are held there by friction as well.

4. Chain according to Claim 1, 2 or 3, characterised in that the clamps comprise the base part (1), corresponding to the width of the tread of the tyres and profiled on its underside with a tread profile (18), and the two side parts in the form of mutually opposite cheeks (3) starting at the sides of this base part and intended to rest against the flanks of the tyres (4).

5. Chain according to Claim 4, characterised by openings (19) arranged in the cheeks (2, 3) in the region of a concentrically extending bead of the tyre flanks.

6. Chain according to one or more of the preceding claims, characterised in that the clamps are connected to one another by at least one flexible band (16, 17) of high tensile strength.

7. Chain according to Claim 6, characterised in that the band or bands (16, 17) extend with form and force transmitting engagement through the material of the clamps.

8. Chain according to Claim 6 or 7, characterised in that the band or bands consist of polyaramide fibres.

# fig-1

fig-2

fig-3

# Fig-4

# Fig-5

fig-6

fig-7

fig-8

9